# EUROPEAN PATENT APPLICATION

(11) **EP 4 836 072 A1**
(43) Date of publication of application: **04.11.2026**
(21) Application number: 24919694.0
(22) Date of filing: 16.08.2024
(51) Int. Cl.: H01M 10/42, G01M 3/04

(54) **BATTERY PACK, ENERGY STORAGE APPARATUS, AND ENERGY STORAGE SYSTEM**

(30) Priority: 25.01.2024 CN 202410110583
(71) Applicant: Huawei Digital Power Technologies Co., Ltd., Shenzhen, Guangdong 518043 (CN)
(72) Inventor: LI, Wenjuan, Shenzhen, Guangdong 518043 (CN)
(74) Representative: Huawei European IPR
(86) International application number: PCT/CN2024/112908
(87) International publication number: WO 2025/156612

(57) **Abstract**

This application provides a battery pack, an energy storage apparatus, and an energy storage system, and relates to the field of energy technologies, to implement a liquid leakage detection function of the battery pack. The battery pack includes a box, a plurality of battery cells, and a liquid leakage detection apparatus. The liquid leakage detection apparatus includes a first wire, a second wire, a separator, a detection port, and an alarm. The detection port includes a first conductive contact and a second conductive contact; the first wire is electrically connected to the first conductive contact; the second wire is electrically connected to the second conductive contact; a part of the first wire extending to the box includes an exposed first wire core portion, and a part of the second wire extending to the box includes an exposed second wire core portion; the separator separates the first wire core portion from the second wire core portion, and the separator is configured to dissolve after contacting an electrolyte, so that the first wire core portion is electrically connected to the second wire core portion. The alarm is electrically connected to the first conductive contact and the second conductive contact, and when the first conductive contact and the second conductive contact are short-circuited, the alarm sends an alarm signal.

## Description

This application claims priority to Chinese Patent Application No. 202410110583.7, filed with the China National Intellectual Property Administration on January 25, 2024 and entitled "BATTERY PACK, ENERGY STORAGE APPARATUS, AND ENERGY STORAGE SYSTEM", which is incorporated herein by reference in its entirety.

### TECHNICAL FIELD

This application relates to the field of energy technologies, and in particular, to a battery pack, an energy storage apparatus, and an energy storage system.

### BACKGROUND

With continuous development and wide application of clean energy, battery cells have begun to be widely applied to various types of devices and systems, such as energy storage apparatuses and energy storage systems. During use, the battery cells are generally integrated and assembled into a battery pack (Battery Pack, PACK for short). For example, the battery pack may include a box and a plurality of battery cells located in the box, and each battery cell includes a battery cell shell and a positive electrode and a negative electrode exposed on the battery cell shell.

Currently, due to manufacturing defects of the battery cell or damage to the battery cell shell during manufacturing of the battery pack, liquid leakage (that is, electrolyte leakage) easily occurs in the battery cell. When liquid leakage occurs in the battery cell, two adjacent columns of battery cells are prone to being short-circuited to form a loop. In addition, when a potential difference between two adjacent columns of battery cells is high, an external short circuit or arcing may occur on the battery cell, igniting an electrolyte and causing rupture of the box, eventually resulting in thermal runaway or thermal runaway propagation of the battery pack.

### SUMMARY

An objective of this application is to provide a battery pack, an energy storage apparatus, and an energy storage system, to implement a liquid leakage detection function of the battery pack.

According to a first aspect, a battery pack is provided, including a box, a plurality of battery cells, and a liquid leakage detection apparatus. The plurality of battery cells are located in the box. The liquid leakage detection apparatus includes a first wire, a second wire, a separator, a detection port, and an alarm. The detection port includes a first conductive contact and a second conductive contact; the first wire is electrically connected to the first conductive contact; the second wire is electrically connected to the second conductive contact; both the first wire and the second wire extend to the box, a part of the first wire extending to the box includes an exposed first wire core portion, and a part of the second wire extending to the box includes an exposed second wire core portion; the separator separates the first wire core portion from the second wire core portion, and the separator is configured to dissolve after contacting an electrolyte, so that the first wire core portion is electrically connected to the second wire core portion, and the first conductive contact and the second conductive contact are short-circuited. The alarm is connected to the detection port, the alarm is electrically connected to the first conductive contact and the second conductive contact, and the alarm is configured to send an alarm signal when the first conductive contact and the second conductive contact are short-circuited.

"So that the first wire core portion is electrically connected to the second wire core portion" includes at least the following two cases. Case 1: After at least a part of the separator is dissolved, the electrolyte indirectly electrically connects the first wire core portion and the second wire core portion. Case 2: After at least a part of the separator is dissolved, the first wire core portion and the second wire core portion are directly electrically connected.

In the battery pack provided in this embodiment of this application, a simple liquid leakage detection apparatus is added, so that when an electrolyte leakage occurs in the battery cell, the electrolyte dissolves at least a part of the separator, so that the first wire core portion is electrically connected to the second wire core portion, the first conductive contact and the second conductive contact are short-circuited, and the alarm sends the alarm signal. The alarm signal may include, for example, a sound signal, an optical signal, a vibration signal, and a terminal control signal, but is not limited thereto. The terminal control signal may be used to control a remote terminal to send prompt information. In this way, it can be quickly detected whether liquid leakage occurs in the battery cell, and a safety risk after a liquid leakage is reduced or eliminated. For example, two adjacent columns of battery cells are short-circuited to form a loop, an external short circuit or arcing occurs on the battery cell, igniting the electrolyte and causing rupture of the box, and eventually resulting in a risk of thermal runaway or thermal runaway propagation of the battery pack. The liquid leakage detection apparatus in this embodiment has advantages of simple structure, low cost, and high reliability.

In some embodiments, the separator includes a first sub-separator, and the first sub-separator is located between the first wire core portion and the second wire core portion. In this embodiment, the first sub-separator may separate the first wire core portion from the second wire core portion. For example, an orthographic projection of the first wire core portion on the first sub-separator and an orthographic projection of the second wire core portion on the first sub-separator may intersect, or may not intersect, for example, may be parallel. In addition, the first sub-separator may further cooperate with any structural wall surface in the battery pack, to limit one of the first wire core portion and the second wire core portion to an independent sealed environment, and limit the other to the outside of the sealed environment. In this way, when the electrolyte dissolves the separator, the first wire core portion is electrically connected to the second wire core portion. This prevents a problem that the first wire core portion is incorrectly connected to the second wire core portion caused by many other factors, and improves accuracy of the liquid leakage detection function.

In some embodiments, the separator further includes a second sub-separator and a third sub-separator, the second sub-separator covers a side of the first wire core portion facing away from the first sub-separator, and the third sub-separator covers a side of the second wire core portion facing away from the first sub-separator. In this embodiment, the first wire core portion may be limited to a sealed environment between the first sub-separator and the second sub-separator, and the second wire core portion may be limited to a sealed environment between the first sub-separator and the third sub-separator. In this way, the first wire core portion may be electrically connected to the second wire core portion only when the electrolyte dissolves the separator. This can prevent a problem that the first wire core portion is incorrectly connected to the second wire core portion caused by more other factors, and improve accuracy of the liquid leakage detection function.

In some embodiments, the box includes a bottom plate, the bottom plate includes a plurality of flow guide grooves, an opening of the flow guide groove faces an interior of the box, and the first wire core portion, the second wire core portion, and the separator that separates the first wire core portion from the second wire core portion all extend to the flow guide groove. In this embodiment, the flow guide groove is disposed on the bottom plate. When liquid leakage occurs in the battery cell, the electrolyte can flow into the flow guide groove, so that the electrolyte is avoided from causing a short circuit between two adjacent columns of battery cells to form a loop, and a safety hazard is further reduced. In addition, the leaked electrolyte also easily contacts the separator in the flow guide groove, so that the separator is dissolved quickly, and the first wire core portion is electrically connected to the second wire core portion, and a fast and effective liquid leakage detection effect is achieved.

In some embodiments, the plurality of battery cells are arranged into a plurality of columns on the bottom plate, the plurality of columns of battery cells are arranged at intervals along a first direction, the first direction is parallel to the bottom plate, and the first direction is perpendicular to a column direction of the plurality of battery cells; and the flow guide groove is disposed on one side or two sides of any column of the battery cells along the first direction. In this embodiment, the flow guide groove is disposed on one side or two sides of any column of the battery cells along the first direction, so that when the battery cell leaks, the electrolyte can more easily flow into the flow guide groove, and a safety hazard is reduced.

In some embodiments, the flow guide groove extends along a column direction of any column of the battery cells adjacent to the flow guide groove. In this way, when the battery cell leaks, the electrolyte can more easily flow into the flow guide groove, and is not easy to flow into one or two adjacent columns of battery cells separated by the flow guide groove, so that a safety coefficient is further improved.

In some embodiments, the first wire core portion, the second wire core portion, and the separator that are located in the flow guide groove all extend along the column direction. In this way, when the battery cell leaks, the electrolyte can more easily flow into the flow guide groove and contact the separator, so that the separator is dissolved quickly, and the first wire core portion is electrically connected to the second wire core portion, and a fast and effective liquid leakage detection effect is achieved.

In some embodiments, dissolution duration of the separator is less than or equal to 72 hours. In this embodiment, the dissolution duration of the separator may be controlled by changing a material and a thickness parameter of the separator, and the dissolution duration of the separator is less than 72 hours, so that a liquid leakage condition of the battery cell can be detected relatively quickly, and safety is improved.

In some embodiments, the material of the separator includes one or a combination of polyethylene and polytetrafluoroethylene. In this way, the separator can be dissolved quickly after contacting the electrolyte, so that a liquid leakage detection speed is increased.

In some embodiments, the detection port is exposed outside the box, and the alarm is connected to the detection port from an outer side of the box. In this way, the alarm is not easily affected by the electrolyte leaked inside the box, so that the alarm is not easily faulty, and reliability is high. In addition, the alarm is easy to maintain and replace, and a maintenance cost is reduced. A connection manner between the alarm and the detection port may not be limited, for example, may be plug connection, snap connection, threaded connection, or the like.

In some embodiments, the battery pack further includes a standby port, where the standby port includes the third conductive contact and the fourth conductive contact; the first wire is further electrically connected to the third conductive contact; and the second wire is further electrically connected to the fourth conductive contact. In this embodiment, the alarm may also be connected to the standby port, and send an alarm signal when the third conductive contact and the fourth conductive contact are short-circuited. By disposing the standby port, when a fault occurs on the detection port, the standby port may be connected to the alarm for monitoring, and no monitoring empty window period occurs. In addition, the detection port and the standby port may be connected to different alarms for monitoring, so as to improve monitoring accuracy and prevent a situation in which the electrolyte leakage is not detected due to a fault of one of the alarms and a greater hazard occurs. The connection manner between the alarm and the standby port may not be limited, for example, may be plug connection, snap connection, threaded connection, or the like.

According to a second aspect, an energy storage apparatus is provided. The energy storage apparatus includes a plurality of battery packs connected in series or in parallel, and at least one of the plurality of battery packs is the battery pack in any one of the foregoing embodiments.

Because the energy storage apparatus provided in this embodiment of this application has the battery pack in any one of the foregoing embodiments, the energy storage apparatus has at least the same beneficial effects as the battery pack in any one of the foregoing embodiments. Details are not described herein again.

According to a third aspect, an energy storage system is provided, including a converter and the energy storage apparatus in the foregoing embodiments. The converter is configured to convert a direct current output by the energy storage apparatus into an alternating current, or convert an alternating current into a direct current to charge the energy storage apparatus.

Because the energy storage system provided in this embodiment of this application has the battery pack in any one of the foregoing embodiments, the energy storage system has at least the same beneficial effects as the battery pack in any one of the foregoing embodiments. Details are not described herein again.

### BRIEF DESCRIPTION OF DRAWINGS

FIG. 1 is a diagram of a structure of a battery pack according to an embodiment of this application;
FIG. 2 is a diagram of a structure of a box of the battery pack shown in FIG. 1;
FIG. 3 is a diagram of a structure of a battery cell module in the battery pack shown in FIG. 1;
FIG. 4 is a diagram of a structure of still another battery pack according to an embodiment of this application;
FIG. 5 is a diagram of a structure of a detection portion according to an embodiment of this application;
FIG. 6 is a diagram of a structure of a bottom plate according to an embodiment of this application;
FIG. 7 is an exploded view of a bottom plate according to an embodiment of this application;
FIG. 8 is a diagram of a structure of a cross-section of a bottom plate and a battery cell according to an embodiment of this application;
FIG. 9 is a diagram of a structure of a cross-section of a bottom plate, a battery cell, and a lower box frame according to an embodiment of this application;
FIG. 10 is a diagram of a structure of an energy storage apparatus according to an embodiment of this application; and
FIG. 11 is a diagram of a structure of an energy storage system according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

The terms such as "first" and "second", below are merely for convenience of description, and shall not be understood as an indication or implication of relative importance or implicit indication of the number of indicated technical features. Therefore, a feature limited by "first", "second" may explicitly or implicitly include one or more features. In the descriptions of this application, unless otherwise stated, "a plurality of" means two or more than two.

In the embodiments of this application, unless otherwise specified and limited, the term "electrical connection" may be direct electrical connection, or may be indirect electrical connection through an intermediate medium.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

In embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In the embodiments of this application, for example, on, under, left, right, front, and rear are relative direction indications used to explain structures and movement of different parts in this application. These indications are appropriate when the parts are in positions shown in the figure. However, if descriptions of the positions of the parts change, these direction indications correspondingly change.

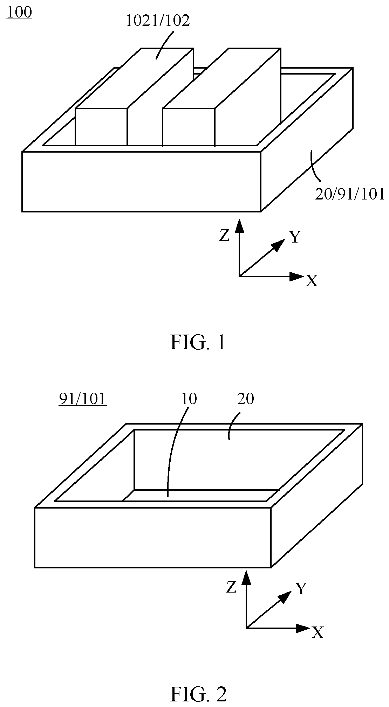

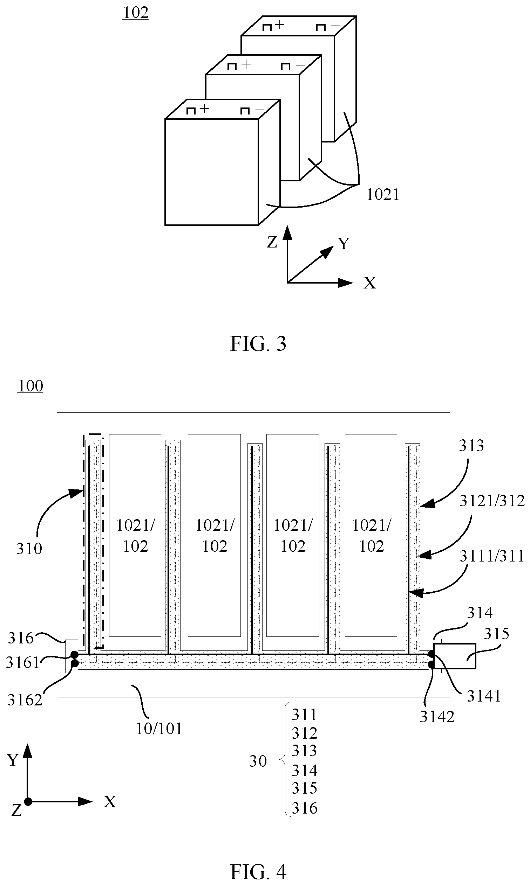

FIG. 1 is a diagram of a structure of a battery pack 100 according to an embodiment of this application. FIG. 2 is a diagram of a structure of a box 101 in the battery pack 100 shown in FIG. 1, and FIG. 3 is a diagram of a structure of a battery cell module 102 in the battery pack 100 shown in FIG. 1. The battery cell module 102 is a self-defined word, and is used to facilitate description of a plurality of battery cells 1021 disposed in a same column in the battery pack 100. In addition, for ease of description of the following embodiments, an XYZ coordinate system is established in FIG. 1 to FIG. 3. For example, a length direction of the battery pack 100 is defined as an X-axis direction (+X is right, and -X is left), a width direction of the battery pack 100 is defined as a Y-axis direction (+Y is back, and -Y is front), and a height direction of the battery pack 100 is defined as a Z-axis direction (+Z is up, and -Z is down). It may be understood that the coordinate system of the battery pack 100 may be flexibly set based on an actual requirement, and no excessive limitation is imposed herein. It may be understood that FIG. 1 to FIG. 3 and the following related accompanying drawings show only some components included in the battery pack 100 as an example. Actual shapes, actual sizes, actual locations, and actual structures of these components are not limited to those in FIG. 1 to FIG. 3 and the following accompanying drawings.

With reference to FIG. 1 to FIG. 3, an embodiment of this application provides a battery pack 100, including a box 101 and a plurality of battery cells 1021, where the plurality of battery cells 1021 are located in the box 101. FIG. 1 is an example in which the plurality of battery cells 1021 are arranged into two columns on a bottom plate 10 of the box, that is, arranged into two battery cell modules 102. A quantity of columns herein is merely an example, and is not specifically limited. For example, the quantity of columns may be one, three, or more.

In the examples in FIG. 1 and FIG. 2, a part of a structure of the box 101 is shown, that is, a lower box 91. The lower box 91 includes the bottom plate 10 and a lower box frame 20, and the lower box frame 20 is connected to an edge of the bottom plate 10. In this case, a complete battery pack 100 may further include an upper box (not shown in the figure), where the upper box includes a top plate and an upper box frame, and the upper box frame is connected to an edge of the top plate. In this way, when the lower box frame 20 is connected to the upper box frame, a box 101 that can encircle the plurality of battery cells 1021 may be disposed together with the top plate and the bottom plate 10. It should be noted that, this is merely an example of an implementation of the box 101. In other embodiments, the box 101 that can encircle the plurality of battery cells 1021 may be formed in another different composition manner. This is not limited in this application.

With reference to FIG. 3, each battery cell 1021 may include a battery cell shell and a positive electrode (+) and a negative electrode (-) exposed on the battery cell shell. The plurality of battery cells 1021 may be sequentially arranged along a Y-axis direction, and a column of battery cells 1021 sequentially arranged along the Y-axis direction forms one battery cell module 102. In addition, the battery cell module 102 may further include a fastening structure (not shown in the figure), for example, an upper cover and a lower cover. The plurality of battery cells 1021 in the battery cell module 102 may be clamped and fastened between the upper cover and the lower cover. For ease of description, the following describes the battery pack 100 with reference to the self-defined word battery cell module 102.

For example, a maximum external short-circuit potential difference of a single battery cell module 102 cannot cause rupture of the battery cell shell. For example, a breakdown voltage of the battery cell shell is 80 V. When a lithium iron phosphate battery cell is used, a total voltage of the single battery cell module 102 should be less than 80 V. In this way, even if a potential difference between adjacent battery cell modules 102 is the highest, rupture of the battery cell shell may be prevented.

As described in the background, the inventor of this application finds through research that an electrolyte leakage easily occurs in the battery cell 1021. When liquid leakage occurs in the battery cell 1021, adjacent battery cell modules 102 are prone to being short-circuited to form a loop. In addition, when the potential difference between the adjacent battery cell modules 102 is high, an external short circuit or arcing occurs on the battery cell, igniting an electrolyte and causing rupture of the box 101, eventually causing thermal runaway or thermal runaway propagation of the battery pack 100. In addition, through further research, the inventor of this application finds that: Existing solutions for detecting whether the electrolyte leakage occurs in the battery cell 1021 in the market require complex liquid leakage detection apparatuses and algorithms, which has problems of high costs and low reliability. Furthermore, in addition to a liquid leakage detection alarm of the battery cell 1021, there is no design that can reduce or eliminate a safety risk after liquid leakage of the battery cell 1021. For example, for a problem that the battery cell 1021 is prone to liquid leakage, a solution in the power battery field includes: A battery management system (Battery management system, BMS) monitors an insulation resistance of a battery pack (PACK) in real time. Once liquid leakage occurs in the battery cell 1021 and causes an insulation abnormality of the battery pack, liquid leakage may be detected and an alarm is generated, preventing further operation of the battery pack 100. A detection method used herein is a bridge method. However, because current conversion needs to be performed in an energy storage system, if a same detection method is used, voltage level fluctuations occur when the energy storage system switches a circuit, resulting in a false alarm. Therefore, the solution is applicable only to the power battery field, and is not applicable to the energy storage field.

In addition, the inventor of this application further finds through research that, in some implementations, to adjust the operating temperature of the battery cell 1021 in the box 101, a liquid cooling design is provided for the bottom plate 10 of the box 101. In this way, the battery cell 1021 may operate within an optimal operating temperature range, thereby prolonging a service life of the battery cell 1021. However, use of the liquid cooling design also introduces a risk that the bottom plate 10 is prone to liquid leakage. For example, because of the problem that the battery cell 1021 is prone to liquid leakage, when liquid leakage occurs in the battery cell 1021, a short circuit is formed between the battery cell 1021 and the box 101 to form a loop, so that rupture of the bottom plate 10 of the box 101 is caused under a high voltage, and coolant in the bottom plate 10 leaks.

Based on at least one of the foregoing technical problems, a liquid leakage detection apparatus 30 is further disposed in the battery pack 100 provided in this embodiment of this application. FIG. 4 is a diagram of a structure of still another battery pack 100 according to an embodiment of this application. A liquid leakage detection apparatus 30 includes a first wire 311, a second wire 312, a separator 313, a detection port 314, and an alarm 315.

The detection port 314 includes a first conductive contact 3141 and a second conductive contact 3142. The first wire 311 is electrically connected to the first conductive contact 3141, and the second wire 312 is electrically connected to the second conductive contact 3142. Both the first wire 311 and the second wire 312 extend to the box 101, a part of the first wire 311 extending to the box 101 includes an exposed first wire core portion 3111, and a part of the second wire 312 extending to the box 101 includes an exposed second wire core portion 3121. The separator 313 separates the first wire core portion 3111 from the second wire core portion 3121, and the separator 313 is configured to dissolve after contacting an electrolyte, so that the first wire core portion 3111 is electrically connected to the second wire core portion 3121, and the first conductive contact 3141 and the second conductive contact 3142 are short-circuited.

The alarm 315 is connected to the detection port 314, and the alarm 315 is electrically connected to the first conductive contact 3141 and the second conductive contact 3142. The alarm 315 is configured to send an alarm signal when the first conductive contact 3141 and the second conductive contact 3142 are short-circuited. The alarm signal may include, for example, a sound signal, an optical signal, a vibration signal, and a terminal control signal, but is not limited thereto. The terminal control signal may be used to control the remote terminal to send prompt information, where the prompt information includes a sound, a picture, light, vibration, or the like. In this way, a staff member or an automatic control device may be reminded to cut off a charging and discharging function of the battery pack, and a safety risk is reduced.

In conclusion, in the battery pack 100 provided in this embodiment of this application, a simple liquid leakage detection apparatus 30 is added, so that when an electrolyte leakage occurs in the battery cell 1021, the electrolyte dissolves at least a part of the separator 313, so that the first wire core portion 3111 is electrically connected to the second wire core portion 3121, the first conductive contact 3141 and the second conductive contact 3142 are short-circuited, and the alarm 315 sends the alarm signal. In this way, it can be quickly detected whether liquid leakage occurs in the battery cell 1021, and a safety risk after a liquid leakage of the battery cell 1021 is reduced or eliminated. For example, two adjacent columns of battery cells 1021 are short-circuited to form a loop, and an external short circuit or arcing occurs on the battery cell 1021, igniting the electrolyte and causing rupture of the box 101, and eventually resulting in a risk of thermal runaway or thermal runaway propagation of the battery pack 100. The liquid leakage detection apparatus 30 in this embodiment has advantages of simple structure, low cost, and high reliability.

For example, the detection port 314 may be exposed outside the box 101. For example, the detection port 314 may be fixedly embedded on a wall of the box 101. In this way, the detection port 314 is conveniently connected to the first wire 311 and the second wire 312 that extend to the box 101. The alarm 315 may be connected to the detection port 314 from an outer side of the box 101. In this way, the alarm 315 is not easily affected by the electrolyte leaked inside the box 101, so that the alarm 315 is not easily faulty, and reliability is high. In addition, the alarm 315 is easy to maintain and replace, and a maintenance cost is reduced. A connection manner between the alarm 315 and the detection port 314 may not be limited, for example, may be plug connection, snap connection, threaded connection, or the like.

For example, still referring to FIG. 4, the battery pack 100 may further include a standby port 316, and the standby port 316 includes a third conductive contact 3161 and a fourth conductive contact 3162. The first wire 311 is further electrically connected to the third conductive contact 3161, and the second wire 312 is further electrically connected to the fourth conductive contact 3162. In this embodiment, the alarm 315 may also be connected to the standby port 316, and send an alarm signal when the third conductive contact 3161 and the fourth conductive contact 3162 are short-circuited. By disposing the standby port 316, when a fault occurs on the detection port 314, the standby port 316 may be connected to the alarm 315 for monitoring, and no monitoring empty window period occurs. In addition, the detection port 314 and the standby port 316 may be connected to different alarms 315 for monitoring, so as to improve monitoring accuracy, and prevent a situation in which the electrolyte leakage is not detected due to a fault of one of the alarms 315 and a greater hazard occurs. The connection manner between the alarm 315 and the standby port 316 may not be limited, for example, may be plug connection, snap connection, threaded connection, or the like.

In an example of FIG. 4, the first wire 311 may include a first main segment connected between the first conductive contact 3141 and the third conductive contact 3161 and a plurality of first sub-segments connected in parallel to the first main segment. The second wire 312 may include a second main segment connected between the second conductive contact 3142 and the fourth conductive contact 3162 and a plurality of second sub-segments connected in parallel to the second main segment. For example, the first main segment and the second main segment may extend along an X-axis direction, and each first sub-segment and each second sub-segment may extend along a Y-axis direction.

Based on the foregoing example, for example, the first sub-segment may be used as the first wire core portion 3111, the second sub-segment may be used as the second wire core portion 3121, and the first wire core portion 3111, the second wire core portion 3121, and the separator 313 between the first wire core portion 3111 and the second wire core portion 3121 are defined as a detection portion 310. The detection portion 310 herein is only named for ease of description, and has no other limiting function. In this way, in FIG. 4, five detection portions 310 are merely an example, the detection portions 310 are disposed on the bottom plate 10, and the detection portions 310 are disposed on at least one side of each column of the battery cells 1021 in the X-axis direction, so that before the electrolyte short-circuits two adjacent columns of battery cells 1021, a liquid leakage condition can be detected in advance and quickly by using the detection portions 310, which is more practical and reliable.

The first wire 311 in this embodiment of this application may be a conductive wire core, or may be a conductive wire core with an insulation jacket. If the first wire 311 is the conductive wire core, the first wire 311 extends to a part in the box 101, and the part is the first wire core portion 3111; if the first wire 311 is the conductive wire core with the insulation jacket, the first wire 311 extends to a part in the box 101, and a part not covered by the insulation jacket is the first wire core portion 3111. It may be understood that, in any case, the conductive wire core needs to be connected to the corresponding first conductive contact 3141 (and/or the third conductive contact 3161) to implement a conductivity detection function. Similarly, the second wire 312 may be a conductive wire core, or may be a conductive wire core with an insulation jacket. A manner of disposing the second wire 312 is similar to that of disposing the first wire 311. Details are not described herein again. The conductive wire core may be any conductive material such as copper.

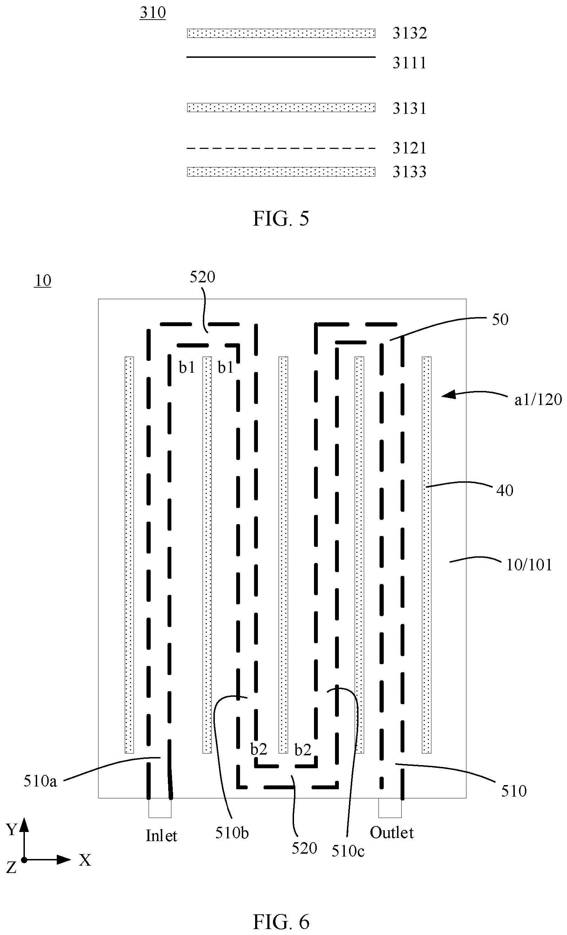

FIG. 5 is a diagram of a layer stack of a detection portion 310 according to an embodiment of this application.

In some embodiments, the separator 313 includes a first sub-separator 3131, and the first sub-separator 3131 is located between the first wire core portion 3111 and the second wire core portion 3121. In this embodiment, the first sub-separator 3131 may separate the first wire core portion 3111 from the second wire core portion 3121. For example, an orthographic projection of the first wire core portion 3111 on the first sub-separator 3131 and an orthographic projection of the second wire core portion 3121 on the first sub-separator 3131 may intersect, or may not intersect, for example, may be parallel (for a parallel case, refer to FIG. 4). In addition, the first sub-separator 3131 may further cooperate with any structural wall surface in the battery pack 100, to limit one of the first wire core portion 3111 and the second wire core portion 3121 to an independent sealed environment, and limit the other to the outside of the sealed environment. In this way, when the electrolyte dissolves the separator, the first wire core portion 3111 is electrically connected to the second wire core portion 3121. This prevents a problem that the first wire core portion 3111 is incorrectly connected to the second wire core portion 3121 caused by many other factors, and improves accuracy of the liquid leakage detection function.

Based on the foregoing embodiment, for example, the separator 313 further includes a second sub-separator 3132 and a third sub-separator 3133, where the second sub-separator 3132 covers a side of the first wire core portion 3111 away from the first sub-separator 3131, and the third sub-separator 3133 covers a side of the second wire core portion 3121 away from the first sub-separator 3131. In this embodiment, the first wire core portion 3111 may be limited to a sealed environment between the first sub-separator 3131 and the second sub-separator 3132, and the second wire core portion 3121 may be limited to a sealed environment between the first sub-separator 3131 and the third sub-separator 3133. In this way, the first wire core portion 3111 may be electrically connected to the second wire core portion 3121 only when the electrolyte dissolves the separator. This can prevent a problem that the first wire core portion 3111 is incorrectly connected to the second wire core portion 3121 caused by more other factors, and improve accuracy of the liquid leakage detection function.

For example, dissolution duration of the separator 313 is less than or equal to 72 hours. In this embodiment, the dissolution duration of the separator may be controlled by changing a material and a thickness parameter of the separator, and the dissolution duration of the separator is less than 72 hours, so that a liquid leakage condition of the battery cell can be detected relatively quickly, and safety is improved. The separator 313 herein may be any one or more of the first sub-separator 3131, the second sub-separator 3132, and the third sub-separator 3133.

For example, the separator 313 is configured to dissolve in first duration after contacting the electrolyte, and the first duration is less than electrolyte resistance duration of the box 101. For example, the first duration may be less than electrolyte resistance duration of the bottom plate 10. It should be noted herein that the electrolyte resistance duration is related to a setting parameter of the battery pack 100. For example, for the battery pack 100, when duration in which the box 101 contacts the electrolyte does not exceed the electrolyte resistance duration, an insulation withstand voltage (for example, the insulation withstand voltage of the bottom plate 10) of the box 101 should be greater than or equal to a total voltage of all battery cell modules in the box, so as to ensure that rupture of the box 101 (for example, the bottom plate 10) is not caused. In some examples, the first duration may be set to less than 72 hours. For example, the first duration may also be set to be less than 48 hours. For another example, the first duration may also be set to be less than 24 hours. For another example, the first duration may be set to be less than 8 hours.

For example, a material of the separator 313 may be a polymer film that is not resistant to the electrolyte. For example, a material of the separator 313 may include one or a combination of polyethylene and polytetrafluoroethylene. In this way, the separator 313 can be dissolved quickly after contacting the electrolyte, so that a liquid leakage detection speed is increased. The separator 313 herein may be any one or more of the first sub-separator 3131, the second sub-separator 3132, and the third sub-separator 3133.

The liquid leakage detection apparatus 30 is described in detail above. The following further describes the bottom plate 10 of the box 101.

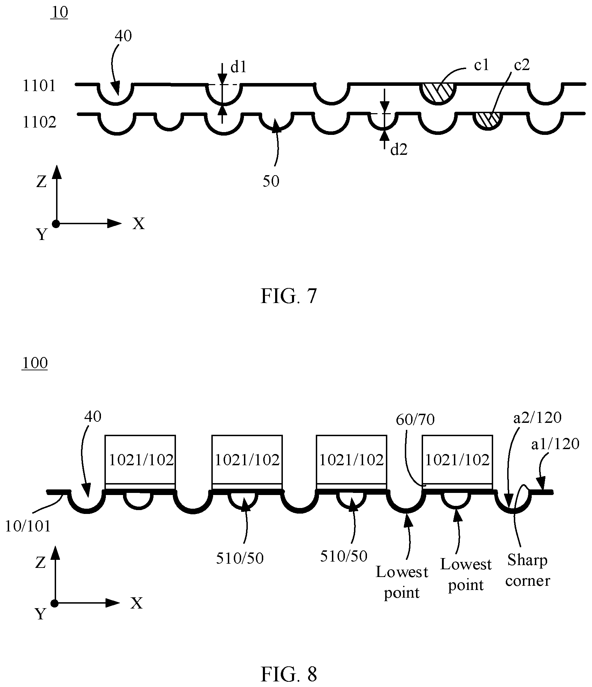

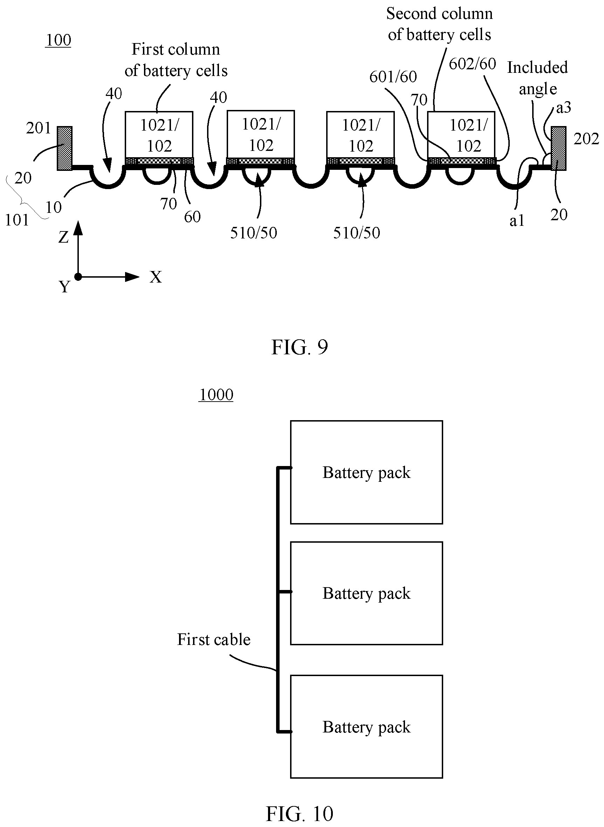

FIG. 6 is a diagram of a structure of a bottom plate 10 according to an embodiment of this application. FIG. 7 is an exploded view of a bottom plate 10 according to an embodiment of this application. FIG. 8 is a diagram of a structure of a cross-section of a bottom plate 10 and a battery cell 1021 according to an embodiment of this application. FIG. 9 is a diagram of a structure of a cross-section of a bottom plate 10, a battery cell 1021, and a lower box frame 20 according to an embodiment of this application.

Based on at least one of the foregoing technical problems, in the battery pack 100 provided in this embodiment of this application, a plurality of flow guide grooves 40 are further disposed on the bottom plate 10. It should be noted that in the battery pack 100 provided in this embodiment of this application, the flow guide groove 40 and the liquid leakage detection apparatus 30 may be disposed at the same time, or one of the flow guide groove 40 and the liquid leakage detection apparatus 30 may be disposed separately. This is not limited in this application. In the following, the flow guide groove 40 is first described separately, and then a cooperation relationship between the flow guide groove 40 and the liquid leakage detection apparatus 30 is described.

With reference to FIG. 6 to FIG. 9, the bottom plate 10 includes the plurality of flow guide grooves 40, and an opening of the flow guide groove 40 faces an interior of the box 101. A plurality of columns of the battery cells 1021 are arranged at intervals along a first direction (an X-axis direction), the first direction is parallel to the bottom plate 10, and the first direction is perpendicular to a column direction (that is, a Y-axis direction) of the plurality of battery cells 1021; and the flow guide groove 40 is disposed on one side or two sides of any column of the battery cells 1021 along the first direction.

According to the battery pack 100 provided in this embodiment of this application, the flow guide groove 40 is disposed on one side or two sides of any column of the battery cells 1021 along the first direction, so that when the battery cell leaks, the electrolyte can more easily flow into the flow guide groove 40, and a safety hazard is reduced.

For example, referring to FIG. 8, the flow guide groove 40 is disposed between two adjacent columns of battery cells 1021. The flow guide groove 40 is disposed on the bottom plate 10, so that an opening of the flow guide groove 40 faces an interior of the box 101, and the flow guide groove 40 is located between two adjacent columns of battery cells 1021. When liquid leakage occurs in the battery cell 1021, the electrolyte flows into the flow guide groove 40, so that the electrolyte is prevented from short-circuiting the two adjacent columns of battery cells 1021 to form a loop, and a safety risk is reduced.

For example, referring to FIG. 9, two outermost columns of the battery cells 1021 are defined as a first column of battery cells 1021 and a second column of battery cells 1021. A first side wall 201 of the box 101 is located on a side of the first column of battery cells 1021 away from the second column of battery cells 1021, and a second side wall 202 of the box 101 is located on a side of the second column of battery cells 1021 away from the first column of battery cells 1021. The flow guide groove 40 is disposed between the first column of battery cells 1021 and the first side wall 201, and/or the flow guide groove 40 is disposed between the second column of battery cells 1021 and the second side wall 202. In this embodiment, the flow guide groove 40 is disposed between the first column of battery cells 1021 and the first side wall 201, so as to protect a joint between the first side wall 201 and the bottom plate 10. When liquid leakage occurs in the battery cell 1021, the electrolyte can flow into the flow guide groove 40 herein, so that the electrolyte is prevented from seeping out of the box 101 through a connection between the first side wall 201 and the bottom plate 10. The flow guide groove 40 is disposed between the second column of battery cells 1021 and the second side wall 202, so as to protect a joint between the second side wall 202 and the bottom plate 10. When liquid leakage occurs in the battery cell 1021, the electrolyte can flow into the flow guide groove 40 herein, so that the electrolyte is prevented from seeping out of the box 101 through a connection between the second side wall 202 and the bottom plate 10.

For example, referring to FIG. 6, FIG. 8, and FIG. 9, the flow guide groove 40 extends along a column direction (that is, a Y-axis direction) of any column of the battery cells 1021 adjacent to the flow guide groove 40. In this embodiment, the flow guide groove 40 is disposed to extend along the column direction (that is, the Y-axis direction), so that the flow guide groove 40 can better prevent two adjacent columns of battery cells 1021 from being short-circuited due to liquid leakage.

For example, in an extension direction (that is, the Y-axis direction) of the flow guide groove 40, at least one end of the flow guide groove 40 exceeds at least one column of the battery cells 1021 adjacent to the flow guide groove 40. In this embodiment, for any flow guide groove 40, a quantity of columns of the battery cells 1021 adjacent to the flow guide groove 40 may be one or two. In addition, because each flow guide groove 40 has two end parts in the extension direction of the flow guide groove 40, there are a plurality of arrangement solutions. For example, in a solution 1, an end part (an end part along the Y-axis direction) of the flow guide groove 40 exceeds a column of the battery cells 1021 adjacent to the flow guide groove 40; in a solution 2, an end part of the flow guide groove 40 exceeds another column of the battery cells 1021 adjacent to the flow guide groove 40; in a solution 3, another end part (the other end part along the Y-axis direction) of the flow guide groove 40 exceeds a column of the battery cells 1021 adjacent to the flow guide groove 40; and in a solution 4, another end part of the flow guide groove 40 exceeds another column of the battery cells 1021 adjacent to the flow guide groove 40. In addition, the foregoing four solutions may not only be separately set, but may also be randomly combined. In this embodiment, because the end part of the flow guide groove 40 may exceed at least one column of the battery cells 1021 adjacent to the flow guide groove 40, and two adjacent columns of the battery cells 1021 are separated, when liquid leakage occurs in the battery cells 1021, the electrolyte can be better prevented from short-circuiting the two adjacent columns of the battery cells 1021 to form a loop.

For example, a shape of a flow cross section of at least one flow guide groove 40 includes any one of a semicircle (as shown in FIG. 7 to FIG. 9), a semi-ellipse, a U shape, a V shape, and a W shape, and the flow cross section is perpendicular to the extension direction of the flow guide groove 40. In this way, the structure strength and reliability of a part that forms the flow guide groove 40 in the bottom plate 10 are good. In addition, for solutions of the semicircle, the semi-ellipse, and the U shape, because there is no sharp corner in the flow guide groove 40, a weak point that is easily corroded by the electrolyte is less likely to occur, and the reliability is higher.

For example, a part of the bottom plate 10 that forms the plurality of flow guide grooves 40 is recessed towards a side of the bottom plate 10 away from the battery cell 1021 relative to another part of the bottom plate 10. In this embodiment, a part of a position of the bottom plate 10 may be recessed towards a side that is away from the battery cell 1021 to form the flow guide groove 40. For example, the flow guide groove 40 may be formed on the bottom plate 10 by stamping, so that the overall strength and reliability of the bottom plate 10 are high.

Still referring to FIG. 6, in some embodiments, a liquid cooling channel 50 may be disposed in the bottom plate 10. An inlet and an outlet of the liquid cooling channel may be located on a same side edge of the bottom plate 10. In a direction perpendicular to the bottom plate 10 (that is, a Z-axis direction), the liquid cooling channel 50 overlaps with the battery cell module 102. In this way, heat of the battery cell module 102 is more easily taken away by coolant in the liquid cooling channel, and a heat dissipation effect is improved.

In some embodiments, as shown in FIG. 7, the bottom plate 10 includes an upper layer plate 1101 and a lower layer plate 1102 that are stacked. The liquid cooling channel 50 is located between the upper layer plate 1101 and the lower layer plate 1102. Herein, a manufacturing process of the bottom plate 10 may be blowing and brazing. Both the lower layer plate 1102 and the upper layer plate 1101 in an area of the flow guide groove 40 need to be designed as grooves, and need to match each other, to ensure that the upper and lower layers can be compacted after the bottom plate is formed, and the flow guide groove 40 does not form a path with the liquid cooling channel 50.

For example, referring to FIG. 6, the liquid cooling channel 50 includes a plurality of primary flow channels 510 and a plurality of connection flow channels 520.

The plurality of primary flow channels 510 are arranged at intervals along an X-axis direction, and all extend along a Y-axis direction. The primary flow channel 510 includes a first end b1 and a second end b2 opposite to each other along the Y-axis direction. For any three adjacent primary flow channels 510, a second primary flow channel 510b is located between a first primary flow channel 510a and a third primary flow channel 510c, the first end b1 of the first primary flow channel 510a is connected to the first end b1 of the second primary flow channel 510b through a connection flow channel 520, and the second end b2 of the second primary flow channel 510b is connected to the second end b2 of the third primary flow channel 510c through another connection flow channel 520. For example, for any primary flow channel 510, a plurality of parallel-connected sub-flow channels may be designed according to heat dissipation requirements of each column of the battery cells 1021, and the plurality of parallel-connected sub-flow channels may be connected in parallel between two connection flow channels 520. Herein, the liquid cooling channel 50 is merely described as an example, and no excessive limitation is imposed.

The plurality of primary flow channels included in the liquid cooling channel 50 may be located below the plurality of columns of battery cells 1021. In this embodiment, the bottom plate 10 including the upper layer plate 1101 and the lower layer plate 1102 may be formed in a manner of blowing and brazing. In addition, at a position of the flow guide groove 40, both the upper layer plate 1101 and the lower layer plate 1102 may be designed as grooves, and match each other, to ensure that the upper layer plate 1101 and the lower layer plate 1102 can be compacted, and the flow guide groove 40 does not form a path with the liquid cooling channel 50. In this embodiment, the bottom plate 10 has a simple structure, is easy to manufacture, and has high practicability.

On the basis of the foregoing embodiment, for example, a lowest point of a part that is formed by the bottom plate 10 and that is of the flow guide groove 40 is lower than a lowest point of a part that is formed by the bottom plate 10 and that is of the liquid cooling channel 50. Refer to FIG. 8. In this embodiment, because the bottom position of the flow guide groove 40 is a double-layer plate, and the bottom position of the liquid cooling channel 50 is a single-layer plate, a lower part of the flow guide groove 40 formed by the bottom plate 10 is disposed, so that a better support effect can be achieved, so that the liquid cooling channel 50 does not easily collapse, and reliability is higher.

For example, the battery cell module 102 extends along a Y-axis direction. In a direction perpendicular to the bottom plate (that is, a Z-axis direction), one battery cell module 102 overlaps with at least one primary flow channel 510. For example, in the examples of FIG. 8 and FIG. 9, one battery cell module 102 overlaps with one primary flow channel 510. Certainly, in another example, one battery cell module 102 may also overlap with two, three, or more primary flow channels 510, so as to further improve a heat dissipation capability of the battery cell module 102.

For example, the flow guide groove 40 extends along a Y-axis direction, and the flow guide groove 40 and the primary flow channel 510 are disposed at intervals in an X-axis direction. In this way, when the battery cell 1021 leaks, the electrolyte can more easily flow into the flow guide groove 40, and a safety coefficient and detection efficiency of the detection portion 310 are improved.

For example, with reference to FIG. 8 and FIG. 9, along the X-axis direction, the flow guide groove 40 is located on one side or two sides of the battery cell module 102. In this way, when the battery cell leaks, the electrolyte can more easily flow into the flow guide groove 40, and a safety coefficient and detection efficiency of the detection portion are improved.

For example, in an X-axis direction, the flow guide groove 40 and the primary flow channel 510 are alternately arranged. In this case, the flow guide groove 40 may be located on one side or two sides of the battery cell module 102, or may be located below the battery cell module 102. In this way, when the battery cell leaks, the electrolyte can more easily flow into the flow guide groove 40, and the safety coefficient and detection efficiency of the detection portion are improved.

In some examples, as shown in FIG. 8 and FIG. 9, there is a primary flow channel 510 right below each battery cell module 102, and there is a flow guide groove 40 on both left and right sides of each battery cell module 102, that is, in this case, a flow guide groove 40 is also disposed between the battery cell module 102 and the lower box frame. In some other examples, there is a primary flow channel 510 right below each battery cell module 102, and there is a flow guide groove 40 between every two adjacent battery cell modules 102, that is, in this case, a flow guide groove 40 may not be disposed between the battery cell module 102 and the lower box frame.

For example, a length of the flow guide groove 40 along the Y-axis direction is less than a length of the primary flow channel 510 along the Y-axis direction. In this way, disposing of the flow guide groove 40 does not easily damage continuity of the liquid cooling channel 50, and does not easily affect an arrangement range and a cooling effect of the liquid cooling channel 50.

For example, as shown in FIG. 7, an area of a flow cross section c1 of the flow guide groove 40 is greater than an area of a flow cross section c2 of the liquid cooling channel 50. In this example, because the area of the flow cross section c1 of the flow guide groove 40 is set to be larger, when the battery cell 1021 leaks, the flow guide groove 40 can accommodate more electrolytes, and the adjacent battery cell modules 102 are effectively prevented from being short-circuited to form a loop.

For example, as shown in FIG. 7, a depth d1 of the flow guide groove 40 is greater than a depth d2 of the liquid cooling channel 50. In this example, because the depth d1 of the flow guide groove 40 is set to be larger, when the battery cell 1021 leaks, the flow guide groove 40 can accommodate more electrolytes, and the adjacent battery cell modules 102 are effectively prevented from being short-circuited to form a loop.

For example, in the direction of the X axis, two ends of the battery cell module 102 do not exceed two ends of the flow guide groove 40 adjacent to the battery cell module 102. In this way, when the battery cell leaks, the electrolyte can more easily flow into the flow guide groove 40, and the safety coefficient and detection efficiency of the detection portion are improved.

In the foregoing solution in which the liquid cooling channel 50 is disposed, because this embodiment of this application can better protect and monitor liquid leakage of the battery cell, rupture of the bottom plate 10 and leakage of the coolant in the liquid cooling channel 50 are less likely to occur.

In some embodiments, as shown in FIG. 6 and FIG. 8, the battery pack 100 further includes an insulation protection layer 120 disposed on a surface of the bottom plate 10 and that faces an interior of the box 101. In this embodiment, the insulation protection layer 120 may be disposed on a surface a1 other than the flow guide groove 40 in the surface of the bottom plate 10 facing into the box 101, and certainly, may be further disposed on a surface a2 of the flow guide groove 40. In this way, rupture of the bottom plate 10 can be more effectively prevented when the battery cell 1021 leaks, and a coolant leakage in the bottom plate 10 is less likely to occur, and the safety coefficient is further improved.

For example, the surface a1 may be designed as a plane, and the flatness may be 0.5 mm to 1.0 mm.

For example, when the insulation protection layer 120 does not contact the electrolyte or duration in which the insulation protection layer 120 contacts the electrolyte is less than or equal to second duration, an insulation withstand voltage of the insulation protection layer 120 is greater than or equal to a total voltage of all the battery cell modules 102 in the box 101; or when duration in which the insulation protection layer 120 contacts the electrolyte is greater than the second duration, the insulation withstand voltage of the insulation protection layer 120 is less than the total voltage of all the battery cell modules in the box 101. In this case, the second duration may be understood as the electrolyte resistance duration of the box 101.

For example, a material of the insulation protection layer 120 may include one or a combination of polypropylene, polyphenylene sulfide, and polycarbonate. In this way, an electrolyte resistance capability of the insulation protection layer 120 may be effectively improved. For example, the second duration may be longer than 72 hours, 80 hours, 90 hours, or 100 hours. For another example, the second duration may be 7 to 14 days.

For example, a manner of forming the insulation protection layer 120 may include spraying an electrolyte-resistant insulation paint or powder, an electrolyte-resistant insulation molecular film, or the like.

In some embodiments, the battery pack 100 further includes protective adhesive. For example, protective adhesive may be used to enhance protection at corners, gaps, and some interfaces that are not well protected. A material of the protective adhesive may be the same as the material of the insulation protection layer 120.

For example, as shown in FIG. 8 and FIG. 9, a protective adhesive 70 may be disposed between at least one column of the battery cells 1021 and the bottom plate 10. The protective adhesive 70 may be evenly applied between the battery cell module 102 and the bottom plate 10. In this way, a better insulation protection function may be achieved between the battery cell module 102 and the bottom plate 10.

For another example, as shown in FIG. 9, the protective adhesive (not shown in the figure) may be disposed at a corner between the surface a1 of the bottom plate 10 and a side wall a3 of the box 101.

For another example, a sharp corner may be formed at at least one sharp corner of the bottom plate 10. For example, in FIG. 8, a sharp corner is formed at a junction between an inner surface a2 of the flow guide groove and the surface a1 of the bottom plate 10. A good protection effect may be achieved by disposing the protective adhesive (not shown in the figure) herein.

According to the foregoing solution, a weak point of the box 101 may be protected by using the protective adhesive, and an electrolyte resistance effect of the box 101 is further improved.

In some embodiments, as shown in FIG. 8 and FIG. 9, the battery pack 100 further includes a spacer structure 60 disposed between at least one column of the battery cells 1021 and the bottom plate 10. In this way, when the battery cell 1021 leaks, the electrolyte is less likely to come into contact with the battery cell 1021, and two adjacent columns of the battery cells 1021 are further prevented from being short-circuited to form a loop.

For example, as shown in FIG. 8, the spacer structure 60 may be located in an entire space between the battery cell module 102 and the bottom plate 10. For another example, as shown in FIG. 9, the spacer structure 60 may include a first spacer portion 601 and a second spacer portion 602, and the first spacer portion 601 and the second spacer portion 602 are disposed at an interval along an X-axis direction. In addition, the protective adhesive 70 may further be applied between the first spacer portion 601 and the second spacer portion 602. For another example, the spacer structure 60 may be disposed in a ring shape, and the protective adhesive 70 may further be applied in an area enclosed by the spacer structure 60.

It should be noted that a height (that is, a size along a Z-axis direction) of the spacer structure 60 may be set based on a cooling requirement of the battery cell module 102 and a maximum leakage amount of a single battery cell. For example, the height of the spacer structure 60 may be negatively correlated with the cooling requirement of the battery cell module 102, and the height of the spacer structure 60 may be positively correlated with the maximum leakage amount of the single battery cell 1021. In addition, the spacer structure 60 may also be made of a material with good thermal conductivity, so that heat can be quickly dissipated to the bottom plate through the spacer structure 60, and a heat dissipation capability is improved. Orthographic projection areas of the spacer structure 60 and the protective adhesive 70 on the XY plane may also be determined according to a thermal conductivity coefficient of the two. For example, a larger orthographic projection area in the XY plane of the spacer structure 60 with a higher thermal conductivity coefficient may be set to improve the heat conduction capability.

The following describes a cooperation relationship between the flow guide groove 40 and the liquid leakage detection apparatus 30.

In some embodiments, the first wire core portion 3111, the second wire core portion 3121, and the separator 313 that separates the first wire core portion 3111 from the second wire core portion 3121 all extend to the flow guide groove 40. For example, the detection portion in FIG. 4 extends to the flow guide groove 40.

In this embodiment, when liquid leakage occurs in the battery cell 1021, the electrolyte may flow into the flow guide groove 40, so that the electrolyte is avoided from causing a short circuit between two adjacent columns of battery cells to form a loop, and a safety hazard is further reduced. In addition, the leaked electrolyte also easily contacts the separator 313 in the flow guide groove 40, so that the separator 313 is dissolved quickly, and the first wire core portion 3111 is electrically connected to the second wire core portion 3121, and a fast and effective liquid leakage detection effect is achieved.

Based on the foregoing embodiment, for example, the first wire core portion 3111, the second wire core portion 3121, and the separator 313 that are located in the flow guide groove 40 all extend along a column direction (that is, a Y-axis direction). In this way, when the battery cell 1021 leaks, the electrolyte can more easily flow into the flow guide groove 40 and contact the separator 313, so that the separator 313 is dissolved quickly, and the first wire core portion 3111 is electrically connected to the second wire core portion 3121, and a fast and effective liquid leakage detection effect is achieved.

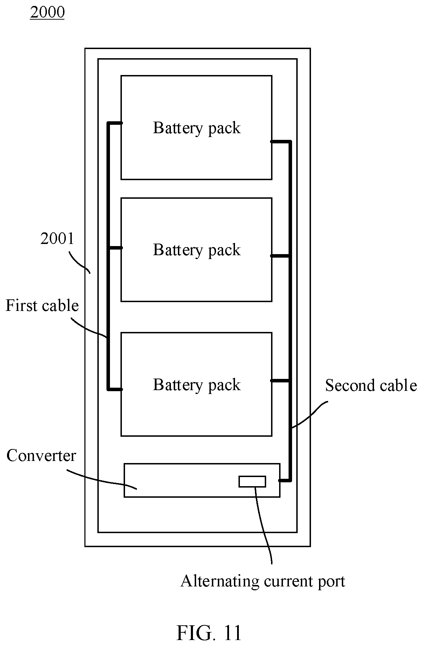

It should be noted that the battery pack 100 may be applied to various scenarios such as home energy storage, industrial energy storage, a data center, and a vehicle, and is configured to store and release electric energy, including but not limited to an energy storage field and a power battery field. The following describes an application scenario of the energy storage system with reference to FIG. 10 and FIG. 11.

FIG. 10 is a diagram of a structure of an energy storage apparatus 1000 according to an embodiment of this application.

Referring to FIG. 10, an embodiment of this application further provides an energy storage apparatus 1000. The energy storage apparatus 1000 includes a plurality of battery packs connected in series or in parallel, and at least one of the plurality of battery packs is the battery pack 100 in any one of the foregoing embodiments. In FIG. 10, an example in which three battery packs are connected in parallel by using a first cable is used. It may be understood that in an actual energy storage apparatus 1000, a quantity of battery packs to be set is not limited. In other words, the quantity of battery packs may be set according to an actual energy storage requirement of the energy storage apparatus 1000.

Because the energy storage apparatus 1000 provided in this embodiment of this application has the battery pack 100 in any one of the foregoing embodiments, the energy storage apparatus 1000 has at least the same beneficial effects as the battery pack 100 in any one of the foregoing embodiments. Details are not described herein again.

FIG. 11 is a diagram of a structure of an energy storage system 2000 according to an embodiment of this application.

Referring to FIG. 11, an embodiment of this application further provides an energy storage system 2000, which may include a converter and an energy storage apparatus 1000. The converter is configured to convert a direct current output by the energy storage apparatus into an alternating current (that is, an alternating current may be output from an alternating current port), or convert an alternating current (that is, an alternating current may be input from an alternating current port) into a direct current to charge the energy storage apparatus 1000.

Still referring to FIG. 11, the energy storage system 2000 may further include an energy storage cabinet 2001, a plurality of battery packs and a converter of the energy storage apparatus 1000 may be placed in the energy storage cabinet 2001, the plurality of battery packs may be connected in parallel by using a first cable, and the converter may be connected to each battery pack via a second cable. In FIG. 10, to show the plurality of battery packs and the converter in the energy storage cabinet 2001, a door body of the energy storage cabinet 2001 is not shown.

For example, the energy storage system 2000 may further include a battery management system (not shown in the figure). The battery management system may effectively detect parameters such as a temperature, a state of charge, and a state of health of the battery pack 100, and may further effectively control a charging and discharging function of the energy storage apparatus 1000, to ensure normal running of the energy storage system 2000.

Because the energy storage system 2000 provided in this embodiment of this application has the battery pack 100 in any one of the foregoing embodiments, the energy storage system 2000 has at least the same beneficial effects as the battery pack 100 in any one of the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, comprising:
a box;
a plurality of battery cells located in the box; and
a liquid leakage detection apparatus, comprising a first wire, a second wire, a separator, a detection port, and an alarm; wherein
the detection port comprises a first conductive contact and a second conductive contact; the first wire is electrically connected to the first conductive contact; the second wire is electrically connected to the second conductive contact; both the first wire and the second wire extend to the box, a part of the first wire extending to the box comprises an exposed first wire core portion, and a part of the second wire extending to the box comprises an exposed second wire core portion; the separator separates the first wire core portion from the second wire core portion, and the separator is configured to dissolve after contacting an electrolyte, so that the first wire core portion is electrically connected to the second wire core portion, and the first conductive contact and the second conductive contact are short-circuited; and
the alarm is connected to the detection port, the alarm is electrically connected to the first conductive contact and the second conductive contact, and the alarm is configured to send an alarm signal when the first conductive contact and the second conductive contact are short-circuited.

2. The battery pack according to claim 1, wherein the separator comprises a first sub-separator, and the first sub-separator is located between the first wire core portion and the second wire core portion.

3. The battery pack according to claim 2, wherein the separator further comprises a second sub-separator and a third sub-separator, the second sub-separator covers a side of the first wire core portion facing away from the first sub-separator, and the third sub-separator covers a side of the second wire core portion facing away from the first sub-separator.

4. The battery pack according to any one of claims 1 to 3, wherein the box comprises a bottom plate, the bottom plate comprises a plurality of flow guide grooves, and an opening of the flow guide groove faces an interior of the box; and
the first wire core portion, the second wire core portion, and the separator that separates the first wire core portion from the second wire core portion all extend to the flow guide groove.

5. The battery pack according to claim 4, wherein the plurality of battery cells are arranged into a plurality of columns on the bottom plate, the plurality of columns of battery cells are arranged at intervals along a first direction, the first direction is parallel to the bottom plate, and the first direction is perpendicular to a column direction of the plurality of battery cells; and the flow guide groove is disposed on one side or two sides of any column of the battery cells along the first direction.

6. The battery pack according to claim 5, wherein
the flow guide groove extends along a column direction of any column of the battery cells adjacent to the flow guide groove.

7. The battery pack according to claim 6, wherein
the first wire core portion, the second wire core portion, and the separator that are located in the flow guide groove all extend along the column direction.

8. The battery pack according to any one of claims 1 to 7, wherein
dissolution duration of the separator is less than or equal to 72 hours.

9. The battery pack according to any one of claims 1 to 8, wherein
a material of the separator comprises one or a combination of polyethylene and polytetrafluoroethylene.

10. The battery pack according to any one of claims 1 to 9, wherein
the detection port is exposed outside the box, and the alarm is connected to the detection port from an outer side of the box.

11. The battery pack according to any one of claims 1 to 10, further comprising a standby port, wherein the standby port comprises the third conductive contact and the fourth conductive contact; and
the first wire is further electrically connected to the third conductive contact, and the second wire is further electrically connected to the fourth conductive contact.

12. An energy storage apparatus, wherein the energy storage apparatus comprises a plurality of battery packs connected in series or in parallel, and at least one of the plurality of battery packs is the battery pack according to any one of claims 1 to 11.

13. An energy storage system, comprising a converter and the energy storage apparatus according to claim 12, wherein the converter is configured to convert a direct current output by the energy storage apparatus into an alternating current, or convert an alternating current into a direct current to charge the energy storage apparatus.
